# EUROPÄISCHE PATENTANMELDUNG

(11) **EP 3 506 458 A1**
(43) Veröffentlichungstag der Anmeldung: **03.07.2019**
(21) Anmeldenummer: 18213052.6
(22) Anmeldetag: 17.12.2018
(51) Int. Cl.: H02J 7/34, H02J 7/00

(54) **VERFAHREN ZUM BETRIEB EINES ELEKTRISCHEN ANTRIEBS- UND STEUERUNGSSYSTEMS**

(30) Priorität: 29.12.2017 DE 102017223874
(71) Anmelder: Robert Bosch GmbH, 70442 Stuttgart (DE)
(72) Erfinder: Kunkel, Steffen, 63768 Hoesbach (DE)
(74) Vertreter: Thürer, Andreas

(57) **Zusammenfassung**

Die Erfindung betrifft ein Verfahren zum Betrieb eines elektrischen Antriebssystems, mit zumindest einem elektrischen Antrieb, welcher aus einer Primärenergiequelle, insbesondere einem Energieversorgungsnetz, mit Energie versorgt wird, wobei elektrische Energie in einem Energiespeicher des Antriebssystems zwischengespeichert und für vorbestimmte Leistungsmanagementfunktionen verwendet wird. Um die Systemdynamik zu verbessern, wird vorgeschlagen, dass mehrere, unterschiedliche Leistungsmanagementfunktionen in dem Antriebssystem gleichzeitig ausgeführt werden, die bedarfsweise Energie speichern und gespeicherte Energie abrufen und die sich hinsichtlich ihrer charakteristischen Anforderungen unterscheiden, insbesondere im Hinblick auf mittlere Leistungsanforderungen und/oder momentane Leistungsanforderungen und/oder Verfügbarkeitsanforderungen und/oder Grundlastanforderungen, wobei zumindest zwei Energiespeicher mit unterschiedlichen, physikalischen Speichereigenschaften, insbesondere im Hinblick auf Zyklenfestigkeit und/oder Energiedichte und/oder Leistungsdichte und/oder elektrischen Wirkungsgrad und/oder Leistungsdynamik, in dem Antriebssystem verwendet werden, und jedem der mindestens zwei Energiespeicher eine unterschiedliche, dedizierte Leistungsmanagementfunktion zugewiesen wird, die mit zumindest einer ausgewählten, physikalischen Eigenschaft des jeweiligen Energiespeichers korrespondiert.

## Beschreibung

Die Erfindung betrifft ein Verfahren zum Betrieb eines elektrischen Antriebssystems nach dem Oberbegriff des Anspruchs 1, ein elektrisches Antriebs- und Steuerungssystem nach dem Oberbegriff des Anspruchs 12 und ein elektrisches Steuermittel nach Anspruch 13. Ein solches Antriebs- und Steuerungssystem hat zumindest einen elektrischen Antrieb, der aus einem Elektromotor und einem zugehörigen Antriebsregler besteht. Ein solches System wird aus einer Primärenergiequelle, insbesondere einem Energieversorgungsnetz, mit Energie versorgt. Es kann aber auch durch eine mobile Primärenergiequelle mit Energie versorgt werden, beispielsweise für mobile Anwendungen. In jedem Fall wird elektrische Energie in einem Energiespeicher des Antriebssystems zwischengespeichert und für vorbestimmte Leistungsmanagementfunktionen verwendet. Solche Antriebs- und Steuerungssysteme finden sich zum Beispiel in industriellen Anwendungen, wie beispielsweise industriellen Maschinen oder Anwendungen der Fabrikautomatisierung. Außerdem kann die Erfindung auch in mobilen Arbeitsmaschinen, wie zum Beispiel Baumaschinen oder Landmaschinen, zur Anwendung kommen.

Generell sind die eingangs genannten Verfahren, Systeme und Steuermittel bekannt, etwa als Antriebssysteme für Pressen mit Energiespeicher, zum Beispiel Schwungmassenspeicher. Solche Antriebssysteme werden verwendet, um mittels des Energiespeichers eine Leistungsspitzen-Reduzierung vorzunehmen. Z.B. beim zyklischen Betrieb einer Presse treten in einem bestimmten Bereich eines Lastzyklus oft hohe Leistungsspitzen auf, während in einem anderen Bereich des Zyklus lediglich eine geringere Leistung gefordert wird. Beim Pressenhub, bei dem ein Werkstück gestanzt oder verformt wird, ist die Höchstleistung des Antriebssystems gefordert, um die gewünschte Materialverformung zu erhalten. Beim Rückhub des Pressensystems ist dagegen beispielsweise nur ein sehr geringer Leistungsbedarf vorhanden, da bei diesem Rückhub keine Verformungsleistung abgefordert wird. Daher ist es für ein solches System sinnvoll, dass der oben genannte Schwungmassenspeicher durch Entnahme von Primärenergie oder durch Energie-Rückspeisung geladen wird (das heißt die Schwungmasse wird beschleunigt) während eines Leerlaufs, Leerhubs oder des Rückhubs eines Pressensystems. Während des Pressenhubs wird dann Energie aus dem Schwungmassenspeicher entnommen, um die oben genannten Leistungsspitzen zu reduzieren. Dadurch wird die erforderliche Anschlussleistung des Antriebssystems insgesamt reduziert. Da zur Verfügung gestellte Anschlussleistung (bzw. Primärleistung) sowohl bei stationären als auch bei mobilen Anlagen sehr aufwendig und teuer ist, werden insgesamt Kosten bzw. Betriebskosten des Gesamtsystems dadurch sehr günstig beeinflusst.

Nachteilig ist bei dem genannten Antriebssystem, dass die mechanischen Komponenten einen in der Regel hohen Wartungsbedarf haben und lediglich eine begrenzte Standzeit aufweisen. Die Dynamik der mechanischen Komponenten ist darüber hinaus physikalisch u.a. durch die beteiligte Massenträgheit, die Dynamik der Motoren bzw. Generatoren sowie die Leistungsfähigkeit der elektrischen Wandler, z.B. Stromrichter, begrenzt, die an die Schwungmasse angekoppelt sind.

Es ist daher Aufgabe der vorliegenden Erfindung, die Systemdynamik, die Systemeffizienz betreffend Speichernutzung und insbesondere auch die Möglichkeiten des Leistungsmanagements zu verbessern.

Dazu wird zunächst ein Verfahren nach Anspruch 1 vorgeschlagen. Die folgenden Ausführungen sind sinngemäß auch auf die Systeme und Steuermittel gemäß den unabhängigen Ansprüchen der Erfindung anwendbar bzw. übertragbar.

Die Erfindung bietet den Vorteil, dass die Systemeffizienz gegenüber den im Stand der Technik bekannten Verfahren erhöht wird, und zwar insbesondere im Hinblick auf die Merkmale des Leistungsmanagements und auch im Hinblick auf die Speichernutzung. So ermöglicht es die Erfindung, im Stand der Technik bekannte Speicher effizient und flexibel zu nutzen, und somit mehrere Leistungsmanagementfunktionen gleichzeitig und passgenau bzw. auf die Applikation angepasst zu verwenden.

Diese Vorteile werden dadurch erreicht, dass zunächst mehrere (zumindest zwei bis drei, vier oder eine Vielzahl, z.B. 5-10), unterschiedliche Leistungsmanagementfunktionen in dem Antriebssystem gleichzeitig ausgeführt werden oder ausführbar sind. Die Leistungsmanagementfunktionen speichern bedarfsweise Energie und rufen gespeicherte Energie bedarfsgemäß ab. Dabei ist es eine Erkenntnis der Erfindung, dass, z.B. komplementäre, Leistungsmanagementfunktionen vorhanden sind, die sich aber hinsichtlich ihrer charakteristischen Anforderungen unterscheiden. Mit Leistungsmanagementfunktionen sind Funktionen gemeint, die eine - vorzugsweise systemweite - Steuerung der Momentanleistung und/oder der durchschnittlichen Leistung und/oder der Leistung über Zeit (zum Beispiel mittlere Energie) erlauben. Des Weiteren können damit Funktionen umfasst sein, die mittlere Leistungsanforderungen, momentane Leistungsanforderungen, Verfügbarkeitsanforderungen oder auch Grundlastanforderungen betreffen. Da Leistungsmanagementfunktionen über die Summierung der betreffenden Leistungen über der Zeit Energiemanagementfunktionen entsprechen können, sind mit Leistungsmanagementfunktionen auch teilweise bis reine Energiemanagementfunktionen umfasst. In diesem Sinne kann der Begriff Leistung an jeder Stelle sinngemäß mit dem Begriff Energie ausgetauscht werden. Im Folgenden wird jedoch der Einfachheit halber lediglich auf Leistungsmanagementfunktionen Bezug genommen.

Um die Anforderungen an das Leistungsmanagement zu erfüllen, speichern die Leistungsmanagementfunktionen bedarfsweise Energie und rufen bedarfsweise gespeicherte Energie ab, und zwar nach Maßgabe der charakteristischen Anforderungen der jeweiligen Leistungsmanagementfunktion.

Dabei kann eine mittlere Leistungsanforderung dadurch charakterisiert sein, dass eine anwendungsspezifische, mittlere Leistung (das heißt insbesondere die über einen charakteristischen Zeitraum gemittelte Momentanleistung) gefordert ist; dabei kann anwendungsspezifisch bedeuten, dass eine spezifische Lastverteilung bei der betrachteten Applikation vorhanden ist, die die mittlere Leistung bestimmt.

Dagegen umfassen momentane Leistungsanforderungen zeitlich in Bezug auf eine charakteristische Anwendung schnell schwankende Leistungen. Dies können zum Beispiel zyklisch auftretende Leistungsspitzen sein, die vorzugsweise lediglich für Bruchteile von Sekunden bis wenige Sekunden andauern. Solche Leistungsspitzen haben bei einigen typischen Pressenanwendungen einen typischen Energieinhalt von wenigen kJ bis hin zu 100 bis 2.000 kJ.

Des Weiteren sind von der Erfindung charakteristische Verfügbarkeitsanforderungen umfasst, die sich auf die Verfügbarkeit einer bestimmten Dauerleistung und/oder Spitzenleistung und/oder Momentanleistung beziehen. Trotzdem hier Leistung im obigen Sinne austauschbar mit dem Begriff der Energie verwendet werden soll, sei an dieser Stelle der Vollständigkeit halber darauf hingewiesen, dass Verfügbarkeitsanforderungen sich auch auf die Verfügbarkeit einer bestimmten Energieversorgung an sich beziehen kann, zum Beispiel im Sinne einer Netzausfallpufferung.

Schließlich beziehen sich die erfindungsgemäßen Grundlastanforderungen insbesondere auf dauerhafte Verfügbarkeit einer bestimmten Leistungs- und/oder Energie-Grundlast. Auch eine solche Grundlastfähigkeit kann mittels eines erfindungsgemäßen Leistungsmanagements unter Zuhilfenahme der erfindungsgemäßen Mittel flexibel, effizient und passgenau für die jeweilige Applikation zur Verfügung gestellt werden.

Die Erfindung greift dabei auf zumindest zwei Energiespeicher mit unterschiedlichen, physikalischen Speichereigenschaften zurück, wobei jedem der mindestens zwei Energiespeicher eine jeweils unterschiedliche, dedizierte Leistungsmanagementfunktion zugewiesen wird; die zugeordnete Leistungsmanagementfunktion korrespondiert hinsichtlich ihrer charakteristischen Anforderungen mit zumindest einer - vorzugsweise für zumindest eine dieser Anforderungen relevanten - ausgewählten, physikalischen Eigenschaft des betreffenden Energiespeichers.

Die Erfindung zeichnet sich dadurch aus, dass zumindest ein Energiespeicher mit unterschiedlichen, physikalischen Speichereigenschaften der jeweiligen Leistungsmanagementfunktion zugeordnet wird, der die Anforderungen des betreffenden Leistungsmanagements anpassbar erfüllt. Die physikalischen Speichereigenschaften unterscheiden sich - insbesondere signifikant - im Hinblick auf ihre Zyklenfestigkeit und/oder ihre Energiedichte und/oder Leistungsdichte und/oder ihren elektrischen Wirkungsgrad und/oder ihre Leistungsdynamik. Die genannten, physikalischen Speichereigenschaften können auch abrufbare und/oder zum Speichern von Energie aufnehmbare Leistung, insbesondere Momentanleistung, die Gesamt-Energiekapazität, Innenwiderstand bzw. Verlauf des Innenwiderstands (insbesondere bei chemischen Speichermedien), Materialzusammensetzung, sicherheitstechnische Merkmale, wie zum Beispiel Brennbarkeit bzw. Eigensicherheit der verwendeten Speichermedien oder peripheren Materialien, Konstanz der elektrischen Parameter, wie zum Beispiel Stromfestigkeit und Spannungsfestigkeit über einen Entladungszyklus, umfassen.

Allgemein ausgedrückt umfassen die physikalischen Speichereigenschaften elektrische Eigenschaften und/oder mechanisch-elektrische Eigenschaften und/oder mechanische und/oder chemische Eigenschaften des Energiespeichers sowie gegebenenfalls auch kinematische Eigenschaften (beispielsweise kinematische Neutralität bei einem Schwungmassenspeicher). Insbesondere sind davon auch die nicht elektronischen Eigenschaften des Energiespeichers insgesamt umfasst. Dabei reicht es im Sinne der Erfindung aus, wenn sich die zumindest zwei Energiespeicher lediglich in einer einzigen, physikalischen Speichereigenschaft in Bezug auf die Applikation relevant unterscheiden.

Beispielhaft seien die folgenden, physikalischen Speichereigenschaften genannt:
Die Zyklenfestigkeit umfasst den Grad der Erhaltung der Funktion des Energiespeichers während des Betriebs, zum Beispiel während einer bestimmten Anzahl von Lade- und Entladezyklen. Die Energiedichte umfasst die speicherbare Energiekapazität pro Volumen oder Masse des Energiespeichers oder des Speichermediums. Die Leistungsdichte kann dabei bedeuten, welche (vorzugsweise maximale Momentan-) Leistung entnommen und/oder zurückgespeist werden kann pro Volumen und/oder Masse des Energiespeichers. Der elektrische Wirkungsgrad gibt insbesondere an, welcher Anteil an aufgenommener und/oder abgegebener Energie und/oder Leistung für die bestimmungsgemäße Verwendung im Antriebssystem wirksam ist. Schließlich gibt die Leistungsdynamik an, welche Leistungsvariationen, gegebenenfalls innerhalb einer bestimmten Zeiteinheit, vom Energiespeicher bewältigt werden können, insbesondere je Volumen oder Masse des beteiligten Energiespeichers bzw. seines Speichermediums.

Die Erfindung weist jedem der mindestens zwei Energiespeicher jeweils eine unterschiedliche, zugeordnete Leistungsmanagementfunktion zu, wobei die Erfindung erkannt hat, dass die entsprechende Leistungsmanagementfunktion mit zumindest einer ausgewählten, physikalischen Eigenschaft des jeweiligen Energiespeichers korrespondiert, d.h. insbesondere, dass eine relevante Anforderung der betreffenden Leistungsmanagementfunktion zumindest einer ausgewählten, physikalischen Eigenschaft des Energiespeichers entspricht bzw. die Eigenschaft die Anforderung in signifikant höherem Maße als andere Energiespeicher erfüllt.

Allgemein gesagt kann die ausgewählte, physikalische Eigenschaft zu der Anforderung der entsprechenden Leistungsmanagementfunktion komplementär sein. Solche komplementären Paare sind beispielsweise hohe bzw. niedrige, gemittelte Leistungsanforderungen der Leistungsmanagementfunktion einerseits und hohe bzw. niedrige Leistungsdichte des Energiespeichers andererseits; hohe bzw. niedrige momentane Leistungsanforderungen einerseits und hohe bzw. niedrige Leistungsdynamik andererseits; hohe bzw. geringe Verfügbarkeitsanforderungen einerseits und hohe bzw. niedrige Zyklenfestigkeit andererseits; hohe bzw. niedrige Grundlast-Leistung bzw. Grundlast-Energie einerseits und hohe bzw. niedrige Leistungsdichte bzw. Energiedichte andererseits; Verwendung als Not-Primärenergiequelle bei Ausfall der Primärenergiequelle (Notbetrieb) einerseits und geringe, erforderliche Zyklenfestigkeit andererseits, da der Notbetrieb nur selten auftritt und daher nur wenige bis gar keine Lade-/Entladezyklen während der Lebensdauer abgerufen werden.

Das Verfahren bietet eine höhere Flexibilität im Hinblick auf die Konfigurationsmöglichkeiten des Antriebssystems, wenn die zumindest zwei Energiespeicher zusätzlich zu einer Stützkapazität des Antriebssystems verwendet werden. Dabei kann die Stützkapazität des Antriebssystems weiterhin als zum Beispiel Zwischenkreis-Kapazität verwendet werden. Außerdem ist die erfindungsgemäße Konfiguration von den elektrischen Eigenschaften, denen eine Stützkapazität unterworfen ist, entkoppelt. Im Beispiel eines Antriebssystems, bei dem durch einen Stromrichter eine Wechselspannung in eine Gleichspannung eines Gleichspannungs-Zwischenkreises gewandelt wird, ist die Stützkapazität typischerweise im Zwischenkreis angeordnet und dient dazu, die Gleichspannung des Zwischenkreises möglichst konstant zu halten und/oder entsprechende Leistungsglättung zu erreichen, zum Beispiel im Falle einer Spitzenlast. Diese Funktion kann bei der vorgeschlagenen Konfiguration ohne Einschränkungen weitergeführt werden. Außerdem können die erfindungsgemäßen Energiespeicher auch elektrisch außerhalb bzw. elektrisch entkoppelt von der Gleichspannung des Zwischenkreises vorgesehen sein. Im Falle eines kapazitiven Energiespeichers beispielsweise ist es durch die Entkopplung unerheblich, über welchen Ladewiderstand der kapazitive Energiespeicher ge- bzw. entladen wird. Allgemein ausgedrückt kann der entsprechende Energiespeicher unabhängig bzw. entkoppelt von der Anordnung einer Stützkapazität des Antriebssystems verwendet werden.

Wenn die Zuweisung der Leistungsmanagementfunktion mittels eines einstellbaren Konfigurationsmodus des Antriebssystems oder automatisiert erfolgt, ist die Erfindung sehr flexibel einsetzbar. Wenn ein einstellbarer Konfigurationsmodus vorgesehen ist, kann beispielsweise durch eine Parametrierung die Zuweisung der Leistungsmanagementfunktionen erfolgen. Dabei können verschiedene Konfigurationsmodi vorgesehen sein, beispielsweise für verschiedene Energiespeicher, verschiedene Leistungsmanagementfunktionen und deren Zuordnung. Wenn die Zuweisung automatisiert (insbesondere automatisch und selbsttätig) erfolgt, ist die Erfindung sehr einfach konfigurierbar und bedienbar.

Eine große Variabilität ergibt sich dadurch, dass die zumindest zwei unterschiedlichen Energiespeicher ausgewählt werden aus den folgenden Alternativen:
Akkumulatoren, insbesondere Lithium-Ionen-Akkumulatoren
Kondensatoren
Superkondensatoren
Hybridkondensatoren
kinetische Energiespeicher, insbesondere Schwungmassenspeicher.

Dabei ist jede Kombination aus den genannten Arten von Energiespeichern erfindungsgemäß umfasst. Auch Kombinationen aus zwei oder mehr gleichen Arten von Energiespeichern sind umfasst, wenn diese sich hinsichtlich ihrer physikalischen Eigenschaften oder insbesondere hinsichtlich ihrer Dimensionen (elektrisch und/oder elektromechanisch und/oder mechanisch und/oder chemisch und/oder sicherheitstechnisch) wesentlich unterscheiden.

Eine Vielzahl von Anwendungsfällen ist dadurch abgedeckt, dass eine Leistungsmanagementfunktion bei temporärem Ausfall der Primärenergiequelle einen Energiespeicher zur Energieversorgung des Antriebssystems unter Bereitstellung einer bedarfsgemäßen, regelmäßigen Momentanleistung oder Grundleistung des Antriebssystems verwendet (Ausfallsicherung). Dadurch wird die Funktion des Antriebssystems bei temporärem Ausfall der Primärenergiequelle gesichert; ein temporärer Ausfall hat dabei eine typische Ausfalldauer von wenigen Millisekunden bis zu Minuten. Entsprechend ist der Energiespeicher, dem die Ausfallsicherung zugeordnet ist, dazu ausgelegt, den Leistungsbedarf bzw. den voraussichtlichen Energiebedarf des Antriebssystems für Sekunden, zum Beispiel ein bis 60 Sekunden bis zu 1-10 Minuten bereitzustellen. Die Ausfallsicherung ist dabei derart konfiguriert, dass sie unter Berücksichtigung der physikalischen Eigenschaften des Energiespeichers eine übliche Energiemenge des Antriebssystems bei einer üblichen Momentanleistung regelmäßig bereitzustellen vermag.

Dabei kann eine erforderliche Momentanleistung als Parameter des Antriebssystems, insbesondere bei einer Inbetriebnahme, konfiguriert werden; dies kann unter Berücksichtigung einer regelmäßig für eine maximale Dauer erforderliche Energiemenge geschehen. Dann ist das Verfahren besonders flexibel einsetzbar bzw. an die Applikation anpassbar. Eine Weiterbildung sieht vor, dass während des Betriebs des Antriebssystems eine erforderliche Momentanleistung, insbesondere automatisch und zyklisch, ermittelt und/oder angepasst wird. Zyklisch umfasst dabei sich regelmäßig, insbesondere mit einer vorgegebenen Zykluszeit, wiederholend und automatisch kann bedeuten, dass eine Ermittlung des entsprechenden Parameters selbsttätig und automatisiert erfolgt.

Eine zuverlässige, wenig wartungsintensive und dabei gleichzeitig vergleichsweise kostengünstige Lösung ergibt sich, wenn für die Ausfallsicherung als Energiespeicher ein kinetischer Speicher mit einem Elektromotor und zugeordnetem Antriebsregler und/oder ein Akkumulator verwendet wird. Ein kinetischer Speicher (Schwungmassenspeicher) mit einem Elektromotor und zugeordnetem Antriebsregler (Stromrichter) muss dabei lediglich eine maximal erforderliche Energiemenge bei antizipierten Leistungsanforderungen bereithalten; dazu kann der kinetischer Speicher bei im wesentlichen konstanter Drehzahl ohne besondere Variationen betrieben werden, wodurch sich insgesamt die mechanische Belastung, zum Beispiel die Belastung der mechanischen Lager, minimieren lässt. Je nach Energiebedarf bzw. Leistungsbedarf kann als kinetischer Speicher auch ein Elektromotor mit zugeordnetem Antriebsregler allein vorgesehen sein, so dass keine separate Schwungmasse vorhanden sein muss; die beteiligte, rotative Masse des Rotors des Elektromotors fungiert dabei als kinetischer Speicher. Neben der Masse und vor allem der Massenverteilung des kinetischen Speichers (dadurch wird der mögliche Energieinhalt bestimmt) sind für die Dimensionierung der Leistungsdynamik und der möglichen Momentanleistung auch die elektrischen Parameter von Elektromotor und zugeordnetem Antriebsregler zu berücksichtigen. Wenn ein Akkumulator verwendet wird, ist die Ausfallsicherung kinematisch neutral; außerdem stehen Akkumulatoren zur Verfügung, die ein breites Spektrum an Anforderungen hinsichtlich Energieinhalt und Leistung bereitstellen.

Bei bestimmten Anwendungen gibt es momentane Leistungsanforderungsspitzen des Antriebssystems, die oft durch entsprechende Auslegung der Primärenergiequelle sichergestellt werden. Dadurch wird die Unterhaltung einer Primärenergiequelle sehr aufwendig und teuer, obgleich die Leistungsanforderungsspitzen nur momentan und in der Regel nicht dauerhaft auftreten. Ein maßgeschneidertes Antriebssystem mit verringerten Betriebskosten und gleichzeitig hoher Leistungsdynamik kann dadurch bereitgestellt werden, dass eine Leistungsmanagementfunktion momentane Leistungsanforderungsspitzen des Antriebssystems an die Primärenergiequelle zumindest partiell ausgleicht, indem zumindest ein Teil des Leistungsbedarfs im Falle einer momentanen Leistungsbedarfsspitze mittels eines Energiespeichers primärseitig ausgeglichen wird (primärseitige Leistungsspitzenreduktion).

Die dazu komplementäre, physikalische Eigenschaft eines Energiespeichers ist eine hohe Leistungsdynamik, also die Fähigkeit, besonders hohe Leistungen und besonders hohe Ströme einerseits zur Speicherung aufzunehmen und andererseits aus dem gespeicherten Energieinhalt bereitzustellen. Solche physikalischen Eigenschaften sind insbesondere bei Kapazitäten, weiter insbesondere bei Superkondensatoren, gegeben. Eine besonders effiziente Kombination ergibt sich daher erfindungsgemäß daraus, dass für die primärseitige Leistungsspitzenreduktion als Energiespeicher ein kapazitiver Speicher, insbesondere eine Kapazität, weiter insbesondere ein Superkondensator, verwendet wird. Zusätzlich kommt auch ein Hybridkondensator in Betracht. Ein Superkondensator, ein so genannter Doppelschichtkondensator, ist für die Erfindung sehr vorteilhaft, da er eine hohe Leistung- und Stromdynamik mit einem gegenüber einem herkömmlichen Kondensator deutlich erhöhten Energiedichte kombiniert. Für das erfindungsgemäße Verfahren sind auch Hybridkondensatoren vorteilhaft, die eine Kombination aus Superkondensator mit anderen Energiespeichermitteln, zum Beispiel chemischen Energiespeichermitteln, verwenden. Typischerweise kann aber auch ein einfacher Elektrolytkondensator vorgesehen sein.

Es kann vorteilhaft sein, wenn der entsprechende, kapazitive Speicher von einer Stützkapazität des Antriebssystems entkoppelt vorgesehen ist, so dass er unabhängig von der Stützfunktion einsetzbar ist. Alternativ oder zusätzlich wird vorgeschlagen, dass das Antriebssystem einen Antriebsregler mit Stromrichter mit einem Gleichspannungs-Zwischenkreis hat und als kapazitiver Speicher eine Zwischenkreiskapazität des Antriebssystems verwendet wird. In diesem Fall können vorhandene Komponenten des Antriebssystems verwendet werden, um die Erfindung zu realisieren. Die Stützkapazität kann dann eine Doppelfunktion ausüben, indem sie als Stützkapazität des Antriebssystems und als erfindungsgemäßer Energiespeicher mit zugeordneter Leistungsmanagementfunktion fungiert. Dies stellt eine einfache und kostengünstige Realisierung des erfindungsgemäßen Verfahrens dar; da der direkt in den Zwischenkreis eingebundene Kondensator im Zuge seiner Normalfunktion auf- und entladen wird, kommt es gegebenenfalls zu einer schwankenden (floatenden) Zwischenkreisspannung, wobei die Schwankungen aber gegebenenfalls durch erfindungsgemäß vorgesehene Korrekturmittel gedämpft bis verhindert werden können.

In dem genannten Fall, in dem das Antriebssystem einen Stromrichter mit einem Gleichspannungs-Zwischenkreis hat, kann der kapazitive Speicher über einen Gleichspannungswandler an den Zwischenkreis angekoppelt sein und derart verwendet werden, dass die Zwischenkreisspannung gleichmäßig und insbesondere im Wesentlichen konstant gehalten wird. Dann ist der kapazitive Speicher praktisch von der Zwischenkreisspannung entkoppelt und kann unabhängig davon erfindungsgemäß als Energiespeicher für seine zugeordnete Leistungsmanagementfunktion verwendet werden. Das hat den Vorteil, dass Schwankungen der Zwischenkreisspannung ausgeglichen und gleichzeitig Leistungsmanagementfunktionen realisiert werden.

Alle oben genannten Ausführungsbeispiele und Ausgestaltungen sind sinngemäß auch für die folgende Ausführung einer Variante der Erfindung anwendbar; es handelt sich dabei um ein elektrisches Antriebs- und Steuerungssystem nach dem Oberbegriff des Anspruchs 12. Dieses Antriebs- und Steuerungssystem hat ein elektrisches Steuermittel zur Steuerung vorbestimmter Leistungsmanagementfunktionen des Antriebs- und Steuerungssystems. Auch hierbei werden den mindestens zwei Energiespeichern dedizierte Leistungsmanagementfunktionen zugeordnet. Die Leistungsmanagementfunktionen werden mittels des elektrischen Steuermittels gesteuert. Vorzugsweise ist eine übergeordnete oder integrierte Steuerung vorgesehen, die ein Teil des oder das gesamte Antriebs- und Steuerungssystem steuert und die genannten Ressourcen koordiniert, insbesondere jedem der mindestens zwei Energiespeicher seine dedizierte Leistungsmanagementfunktion(en) zuordnet. Dazu kann in dem Steuermittel ein entsprechendes Leistungsmanagementmodul vorgesehen sein, welches beispielsweise die komplementären Eigenschaften von Energiespeichern und Leistungsmanagementfunktion aufweist, beispielsweise in Form einer Referenztabelle.

Des Weiteren ist von der Erfindung ein elektrisches Steuermittel zur Durchführung eines Verfahrens nach einem der Ansprüche 1-11 umfasst. Für dieses elektrische Steuermittel sind alle Ausführungen hierin zu den erfindungsgemäßen Verfahren und Systemen technisch sinngemäß anwendbar, so dass alles hier ausgeführte auch insoweit Gültigkeit behält. Das Steuermittel ist vorzugsweise in einem Stromrichter des Antriebssystems integriert. Alternativ oder zusätzlich kann ein übergeordnetes, elektrisches Steuermittel vorgesehen sein, das ebenfalls Koordinationsfunktionen des elektrischen Antriebs- und Steuerungssystems vornimmt, so dass eine Master-Slave-Struktur realisiert wird. Eine Konfiguration bzw. die erfindungsgemäße Zuordnung von Energiespeichern und deren dedizierte Leistungsmanagementfunktion kann über eine Mastersteuerung erfolgen. Das hat den Vorteil, dass die Mastersteuerung die gesamte Systemkonfiguration verwaltet und dadurch optimal einzurichten vermag.

Die Erfindung wird anhand eines Ausführungsbeispiels, das in der beigefügten Figur gezeigt ist, näher erläutert.

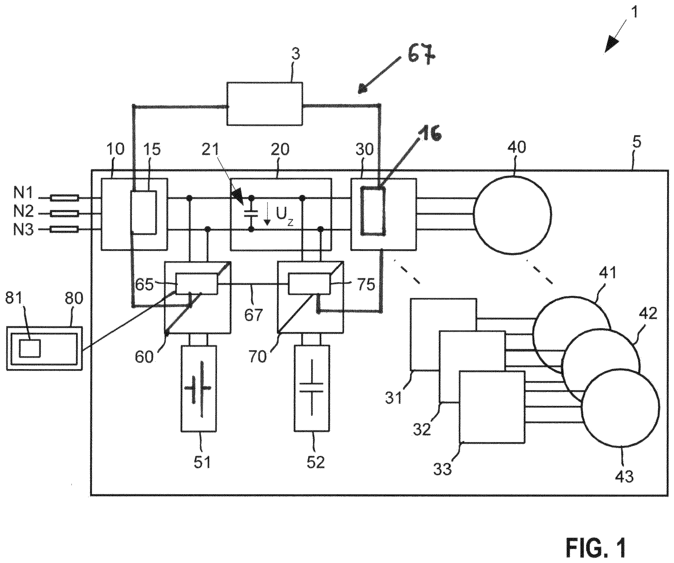

Figur 1 zeigt ein erfindungsgemäßes Antriebs- und Steuerungssystem 1 in grober, schematischer Ansicht.

Sofern im Folgenden nichts Anderes ausgeführt ist, gelten gleiche Bezugszeichen für technisch gleichwertige Merkmale. Die in der Figur gezeigten, technischen Ausgestaltungsmerkmale sind auf jede hierin ausgeführte Variante der Erfindung anwendbar, und zwar auch unabhängig von anderen, in der Figur etwa ausgeführten Merkmalen.

Das in der Figur 1 gezeigte Antriebs- und Steuerungssystem 1 hat als Energieversorgung eine Primärenergiequelle, die im gezeigten Ausführungsbeispiel als dreiphasiger Netzanschluss N1, N2, N3 dargestellt ist. Es handelt sich dabei um eine stationäre Anlage beispielsweise der Fabrikautomation; die Erfindung ist allerdings auch für mobile Anwendungen geeignet. Bei dem gezeigten Antriebs- und Steuerungssystem 1 ist eine übergeordnete, elektrische Steuerung 3 vorhanden, die über eine Kommunikations-Verbindung 67, insbesondere einen industriellen Feldbus, mit Komponenten eines Antriebssystems 5 kommuniziert und diese steuert. Das Antriebssystem 5 hat elektrische Antriebe, die jeweils aus einem Elektromotor 40, 41, 42, 43 bestehen und jeweils einen zugehörigen Stromrichter 30, 31, 32, 33 haben. Über einen (insbesondere rückspeisefähigen) Versorger werden die Stromrichter 30, 31, 32, 33 mit Energie beziehungsweise Leistung aus dem Stromnetz N1, N2, N3 versorgt und fungieren als elektrische Last des Antriebssystems 5.

Es sind zwei Energiespeicher 51, 52 gezeigt, in denen für vorbestimmte Leistungsmanagementfunktionen Energie zwischengespeichert und verwendet wird. Die Leistungsmanagementfunktionen des Antriebssystems 5 werden lokal durch dafür vorgesehene Module 15, 16 (jeweils als Leistungsmanagement-Modul und/oder elektrische Steuerung) ausgeführt und koordiniert. Die Leistungsmanagement-Module 15, 16 sind jeweils in einen Versorger 10 und/oder in einen Stromrichter 30 integriert dargestellt. Zusätzlich sind Stromrichter 60, 70 gezeigt, die jeden der Energiespeicher 51, 52 mit einem Gleichspannungs-Zwischenkreis 20 des Antriebssystems 5 elektrisch koppeln. Auch die dort integrierten, elektrischen Steuerungen 65, 75 können Teile der erfindungsgemäßen Leistungsmanagementfunktionen übernehmen. Daraus wird ersichtlich, dass in dem Antriebssystem 5 mehrere, unterschiedliche Leistungsmanagementfunktionen gleichzeitig ausgeführt werden. Diese unterscheiden sich im oben genannten Sinne hinsichtlich ihrer charakteristischen Anforderungen.

Die gezeigten zwei Energiespeicher 51, 52 haben unterschiedliche, physikalische Speichereigenschaften. Im genannten Ausführungsbeispiel sind ein Schwungmassenspeicher 51 und ein Superkondensator 52 vorhanden, denen jeweils - beispielsweise über ein zugeordnetes Leistungsmanagement-Modul 15, 16, 65, 75 - eine dedizierte Leistungsmanagement-Funktion zugewiesen wird. Die dem jeweiligen Energiespeicher 51, 52 zugewiesene Leistungsmanagementfunktion korrespondiert mit zumindest einer ausgewählten, physikalischen Eigenschaft des jeweiligen Energiespeichers 51, 52

Wie im Ausführungsbeispiel gezeigt, ist eine Zwischenkreis-Kapazität 20 vorgesehen, und die beiden Energiespeicher 51, 52 sind zusätzlich zu dieser Zwischenkreis-Kapazität 21 vorhanden. Sie sind damit unabhängig von der Funktion der Zwischenkreis-Kapazität 21 zu verwenden; alternativ oder zusätzlich kann selbstverständlich auch die Zwischenkreis-Kapazität 21 für Leistungsmanagement-Funktionen verwendet werden. Der Vollständigkeit halber ist noch gezeigt, dass an der Zwischenkreis-Kapazität 21 die Zwischenkreis-Gleichspannung U_{Z} abfällt.

Anhand der Figur 1 kann das erfindungsgemäße Verfahren wie folgt beschrieben werden: Zunächst können durch die übergeordnete, elektrische Steuerung 3 mittels eines einstellbaren Konfigurationsmodus die Leistungsmanagementfunktionen jeweils dedizierten Energiespeichern 51, 52 zugewiesen werden. Die Zuweisung aller Leistungsmanagementfunktionen zu den jeweiligen Energiespeichern 51, 52 wird über den Feldbus 67 vorzugsweise im gesamten Antriebssystem 5 kommuniziert, so dass jede lokale, dezentrale Steuerung 15, 16, 65, 75 die entsprechende, momentane Konfiguration der Energiespeicher 51, 52 des Antriebssystems 5 kennt. Die Konfiguration kann beispielsweise über eine zur Inbetriebnahme vorgesehene Bedieneinrichtung 80 mit zugehörigem Display 81 erfolgen. Dazu ist eine - dauerhafte oder temporäre - Kommunikationsverbindung in das Antriebs- und Steuerungssystem 1 vorgesehen, so dass die Konfiguration über die Bedieneinrichtung 80 vorgenommen und über den Feldbus 67 im gesamten Antriebs-Steuerungssystem 1 kommuniziert und eingestellt werden kann.

Die Leistungsmanagementfunktionen mit ihren zugeordneten Energiespeichern 51, 52 werden vorzugsweise über die lokalen, zugeordneten, elektrischen Steuerungen 65, 75 in Echtzeit zyklisch gesteuert. Dadurch kann der momentane Zustand des Antriebs- und Steuerungssystems 1 bei der Ausführung des erfindungsgemäßen Verfahrens vollständig berücksichtigt werden. Die zyklische Steuerung erfolgt vorzugsweise über einen systemweiten Feldbus 67, der mit einem Systemtakt getaktet ist, der einem üblichen, industriellen Systemtakt entspricht. Ein solcher Systemtakt kann 10-100 ms betragen oder auch für harte Echtzeit-Anwendungen lediglich wenige Millisekunden bis hinunter zu 10-100 Mikrosekunden.

Wenn in dem gezeigten Ausführungsbeispiel dem Schwungmassenspeicher 51 eine Ausfallsicherung zugeordnet ist und dem Superkondensator 52 eine primärseitige Leistungsspitzenreduktion, funktioniert das Verfahren wie hierin angegeben:
Bei einem primärseitigen Ausfall der Energieversorgung wird der beispielsweise mit konstanter Drehzahl betriebene Schwungmassenspeicher 51 mittels eines hier nicht gezeigten Elektromotors, der auch als Generator verlieren kann, gebremst; dadurch wird die kinetische Energie des Schwungmassenspeichers 51 in elektrische Energie über den als Generator fungierenden Elektromotor umgewandelt und über den Stromrichter 60 gleichgerichtet, an die Spannungslage des Gleichspannungs-Zwischenkreises 20 angepasst und in den Gleichspannungs-Zwischenkreis 20 eingespeist, so dass die Versorgung der Komponenten 30, 31, 32, 33 des Antriebssystems 5 mit Leistung bzw. Energie in diesem Fall über Entnahme aus dem Schwungmassenspeicher 51 erfolgen kann. Um diese Funktion gewährleisten zu können, wird bei regulärer, primärseitiger Versorgung des Antriebssystems 5 der Schwungmassenspeicher 51 vorgeladen und beispielsweise auf eine konstante Drehzahl beschleunigt und dort gehalten, sodass eine vorbestimmte Energiemenge bei Ausfall der primärseitigen Versorgung wie oben genannt bereitsteht.

Im zyklischen Betrieb der Applikation, die durch das erfindungsgemäße Antriebs- und Steuerungssystem 1 betrieben wird, können die bereits oben ausgeführten Leistungsspitzen auftreten. Um im Sinne einer primärseitigen Leistungsspitzenreduktion fungieren zu können, wird während des zyklischen Betriebs des Antriebssystems 5 der Superkondensator 52 auf einem vorbestimmten Ladezustand oder Ladezustandsverlauf gehalten. Beispielsweise kann dann eine angeforderte Leistungsspitze (beispielsweise beim Lasthub einer Presse) teilweise durch Entnahme von Energie bzw. Leistung aus dem Superkondensator 52 über den zugeordneten Stromrichter 70 erfolgen, der in diesem Fall die Entladespannung des Superkondensators an die Spannungslage des Gleichspannungs-Zwischenkreises anpasst und als reiner DC/DC-Wandler fungiert. Ein gegebenenfalls vorhandener Innenwiderstand des Superkondensators 52 ist in der Figur nicht gezeigt; dieser kann dazu vorgesehen sein, den Lade- bzw. Endlagerstrom einzustellen. Die vom Zwischenkreis 21 abgeforderte Leistungsspitze wird durch Entnahme von Leistung/Energie aus dem Superkondensator 52 (zumindest teilweise) gedeckt.

### Bezugszeichenliste

- 1: Antriebs- und Steuerungssystem
- 3: elektrische Steuerung
- 5: Antriebssystem
- 10: Versorger
- 15: elektrische Steuerung (Leistungsmanagement-Modul)
- 16: elektrische Steuerung (Leistungsmanagement-Modul)
- 20: Gleichspannungs-Zwischenkreis
- 21: Zwischenkreis-Kapazität
- 30: Stromrichter
- 31: Stromrichter
- 32: Stromrichter
- 33: Stromrichter
- 40: Elektromotor
- 41: Elektromotor
- 42: Elektromotor
- 43: Elektromotor
- 51: Schwungmassenspeicher
- 52: Superkondensator
- 60: Stromrichter
- 65: elektrische Steuerung
- 67: Kommunikationsverbindung
- 70: Stromrichter
- 75: elektrische Steuerung
- 80: Bedieneinrichtung
- 81: Display

## Patentansprüche

1. Verfahren zum Betrieb eines elektrischen Antriebssystems, mit zumindest einem elektrischen Antrieb, bestehend aus einem Elektromotor und einem zugehörigen Antriebsregler, welcher aus einer Primärenergiequelle, insbesondere einem Energieversorgungsnetz, mit Energie versorgt wird, wobei elektrische Energie in einem Energiespeicher des Antriebssystems zwischengespeichert und für vorbestimmte Leistungsmanagementfunktionen verwendet wird,
**dadurch gekennzeichnet, dass**
- mehrere, unterschiedliche Leistungsmanagementfunktionen in dem Antriebssystem gleichzeitig ausgeführt werden, die bedarfsweise Energie speichern und gespeicherte Energie abrufen und die sich hinsichtlich ihrer charakteristischen Anforderungen unterscheiden, insbesondere im Hinblick auf mittlere Leistungsanforderungen und/oder momentane Leistungsanforderungen und/oder Verfügbarkeitsanforderungen und/oder Grundlastanforderungen,
- wobei zumindest zwei Energiespeicher mit unterschiedlichen, physikalischen Speichereigenschaften, insbesondere im Hinblick auf Zyklenfestigkeit und/oder Energiedichte und/oder Leistungsdichte und/oder elektrischen Wirkungsgrad und/oder Leistungsdynamik, in dem Antriebssystem verwendet werden,
- und jedem der mindestens zwei Energiespeicher eine unterschiedliche, dedizierte Leistungsmanagementfunktion zugewiesen wird, die mit zumindest einer ausgewählten, physikalischen Eigenschaft des jeweiligen Energiespeichers korrespondiert.

2. Verfahren nach Anspruch 1, **dadurch gekennzeichnet, dass** die zumindest zwei Energiespeicher zusätzlich zu einer Stützkapazität des Antriebssystems verwendet werden.

3. Verfahren nach Anspruch 1 oder 2, **dadurch gekennzeichnet, dass** die Zuweisung der Leistungsmanagementfunktionen mittels eines einstellbaren Konfigurationsmodus des Antriebssystems oder automatisiert erfolgt.

4. Verfahren nach einem der Ansprüche 1 bis 3, **dadurch gekennzeichnet, dass** die zwei unterschiedlichen Energiespeicher ausgewählt werden aus:
- Akkumulatoren, insbesondere Lithium-Ionen-Akkumulatoren
- Kondensatoren
- Superkondensatoren
- Hybridkondensatoren
- kinetischen Energiespeichern, insbesondere Schwungmassenspeichern.

5. Verfahren nach einem der Ansprüche 1 bis 4, **dadurch gekennzeichnet, dass** eine Leistungsmanagementfunktion bei temporärem Ausfall der Primärenergiequelle einen Energiespeicher zur Energieversorgung des Antriebssystems unter Bereitstellung einer bedarfsgemäßen, regelmäßigen Momentanleistung des Antriebssystems verwendet (Ausfallsicherung).

6. Verfahren nach Anspruch 5, **dadurch gekennzeichnet, dass** eine erforderliche Momentanleistung als Parameter des Antriebssystems, insbesondere bei einer Inbetriebnahme, konfiguriert wird und/oder während des Betriebs des Antriebssystems, insbesondere automatisch und zyklisch, ermittelt und/oder angepasst wird.

7. Verfahren nach Anspruch 5 oder 6, **dadurch gekennzeichnet, dass** für die Ausfallsicherung als Energiespeicher ein kinetischer Speicher mit einem Elektromotor und zugeordnetem Antriebsregler und/oder ein Akkumulator verwendet wird.

8. Verfahren nach einem der Ansprüche 1 bis 7, **dadurch gekennzeichnet, dass** eine Leistungsmanagementfunktion momentane Leistungsanforderungsspitzen des Antriebssystems an die Primärenergiequelle zumindest partiell ausgleicht, indem zumindest ein Teil des Leistungsbedarfs im Falle einer momentanen Leistungsbedarfsspitze mittels eines Energiespeichers primärseitig ausgeglichen wird (primärseitige Leistungsspitzenreduktion).

9. Verfahren nach Anspruch 8, **dadurch gekennzeichnet, dass** für die primärseitige Leistungsspitzenreduktion als Energiespeicher ein kapazitiver Speicher, insbesondere eine Kapazität, weiter insbesondere ein Superkondensator, verwendet wird.

10. Verfahren nach Anspruch 9, **dadurch gekennzeichnet, dass** das Antriebssystem einen Antriebsregler mit Umrichter mit einem Gleichspannungs-Zwischenkreis hat und als kapazitiver Speicher eine Zwischenkreiskapazität des Antriebssystems verwendet wird.

11. Verfahren nach Anspruch 9 oder 10, **dadurch gekennzeichnet, dass** das Antriebssystem einen Antriebsregler mit Umrichter mit einem Gleichspannungs-Zwischenkreis hat und der kapazitive Speicher über einen Gleichspannungswandler an den Zwischenkreis angekoppelt ist und dazu verwendet wird, die Zwischenkreisspannung zu vergleichmäßigen, insbesondere im Wesentlichen konstant zu halten.

12. Elektrisches Antriebs- und Steuerungssystem, insbesondere zur Durchführung eines Verfahrens nach einem der Ansprüche 1 bis 11, mit zumindest einem elektrischen Antrieb, bestehend aus einem Elektromotor und einem zugehörigen Antriebsregler, mit einem Anschluss für eine Primärenergiequelle, insbesondere ein Energieversorgungsnetz, zur Energieversorgung, mit einem Energiespeicher, und mit einem elektrischen Steuermittel, welches zur Steuerung vorbestimmter Leistungsmanagementfunktionen des Antriebs- und Steuerungssystems vorgesehen ist,
**dadurch gekennzeichnet, dass**
- mehrere, unterschiedliche, parallel ablaufende Leistungsmanagementfunktionen in dem Antriebssystem vorgesehen sind, die bedarfsweise Energie speichern und gespeicherte Energie abrufen können und die sich hinsichtlich ihrer charakteristischen Anforderungen unterscheiden, insbesondere im Hinblick auf mittlere Leistungsanforderungen und/oder momentane Leistungsanforderungen und/oder Verfügbarkeitsanforderungen und/oder Grundlastanforderungen,
- wobei zumindest zwei Energiespeicher mit unterschiedlichen, physikalischen Speichereigenschaften, insbesondere im Hinblick auf Zyklenfestigkeit und/oder Energiedichte und/oder Leistungsdichte und/oder elektrischen Wirkungsgrad und/oder Leistungsdynamik, vorhanden sind,
- und jedem der mindestens zwei Energiespeicher eine unterschiedliche, dedizierte Leistungsmanagementfunktion zugeordnet ist, die mit zumindest einer ausgewählten, physikalischen Eigenschaft des jeweiligen Energiespeichers korrespondiert.

13. Elektrisches Steuermittel zur Durchführung eines Verfahrens nach einem der Ansprüche 1 bis 11.

14. Steuermittel nach Anspruch 13, **dadurch gekennzeichnet, dass** es in einem Antriebsregler des Antriebssystems integriert ist.
